# EUROPÄISCHE PATENTSCHRIFT

(11) **EP 0 564 836 B1**
(45) Veröffentlichungstag und Bekanntmachung des Hinweises auf die Patenterteilung: **18.12.1996**
(21) Anmeldenummer: 93103916.8
(22) Anmeldetag: 11.03.1993
(51) Int. Cl.: G06F 11/00

(54) **Schaltung zur Überwachung von mindestens einem Rechenbaustein**
Watchdog circuit with at least one computing module
Circuit de surveillance avec au moins un module de calcul

(30) Priorität: 10.04.1992 DE 4212069
(43) Veröffentlichungstag der Anmeldung: 13.10.1993
(73) Patentinhaber: Hella KG Hueck & Co., 59552 Lippstadt (DE)
(72) Erfinder: Wiegmann, Werner, W-4780 Lippstadt (DE); Niggemann, Detlef, W-4793 Steinhausen (DE)

(56) Entgegenhaltungen:
- WO-A-90/03602
- DE-A- 3 902 037
- IEEE TRANSACTIONS ON CONSUMER ELECTRONICS Bd. 36, Nr. 4, November 1990, New York, US, SS 832-836; A. NÄTHE ET AL.: 'Voltage regulator with additional watchdog function'

## Beschreibung

Die Erfindung betrifft eine Schaltung zur Überwachung von mindestens einem Rechenbaustein, bei dem ein Rechenbaustein während des Programmlaufs Triggerimpulse an eine Überwachungsschaltung abgibt, und bei der die Überwachungsschaltung einen Frequenz-Spannungswandler aufweist, welcher ein von der Frequenz der Triggerimpulse abhängiges Spannungssignal abgibt und die einen Fensterkomparator aufweist, der ein Signal erzeugt, wenn der Frequenz-Spannungswandler eine Spannung abgibt, die innerhalb des Fensterbereichs des Fensterkomparators liegt.

Sicherheitskritische Vorrichtungen, die einen Rechenbaustein aufweisen, weisen im allgemeinen eine sogenannte Watch-Dog-Schaltung auf. Hierbei gibt der Rechenbaustein an vorgegebenenen Programmpunkten Triggerimpulse an eine Kippschaltung, so daß diese in regelmäßigen Abständen zurückgesetzt wird. Bleiben die Triggerimpulse längere Zeit aus, so löst die Kippschaltung einen Reset- oder ein Fehlersignal aus. Nachteilig an solchen Schaltungen ist, daß die vom Rechenbaustein abgegebenen Triggerimpulse im allgemeinen lediglich auf Unterfrequenz überwacht werden.

Zwar ist aus der DE-GM 90 13 585 eine Schaltungsanordnung bekannt, bei der eine eingespeiste Taktimpulsfolge sowohl hinsichtlich der Einhaltung einer unteren, wie auch einer oberen Grenzfrequenz überprüft wird. Die aufgeführte Schaltung ist jedoch relativ aufwendig, da sie eine größere Anzahl von Logikbausteinen beinhaltet. Zudem müssen zur Vorgabe der oberen und der unteren Grenzfrequenz zwei Referenzfrequenzen erzeugt und in die Schaltungsanordnung eingespeist werden.

Aus der WO-A-90 03 602 ist eine Schaltung zur Überwachung eines Rechenbausteins bekannt, bei der eine von dem genannten Rechenbaustein erzeugte Taktpulsfolge einem Frequenz-Spannungswandler zugeführt wird, um ein Ausgangssignal zu erzeugen, dessen Spannungspegel den Frequenz der genannten Taktpulsfolge entspricht. Weiter its ein Fensterkomparator vorgesehen, dem das Ausgangssignal des Frequenz-Spannungswandlers zugeführt wird, um zu überprüfen, ob die Spannung des Ausgangssignals zwischen einem unteren und einem oberen Grenzwert liegt, das heißt, ob die Frequenz der Taktpulsfolge innerhalb zwei bestimmter Grenzwerte liegt.

Aus der DE-OS 36 40 351 ist eine Schaltungsanordnung bekannt, bei der ein Kondensator über einen Widerstand aufgeladen wird. Ein dem Kondensator parallel geschalteter Transistor entlädt den Kondensator regelmäßig im Abstand der zugeführten Taktimpulse. Die am Kondensator anliegende Spannung hängt somit direkt von der zugeführten Taktfrequenz ab. Mehrere nachgeschaltete Komparatoren überprüfen diese Spannung hinsichtlich oberer und unterer Grenzwerte und erzeugen über nachgeschaltete Logikbausteine in Abhängigkeit von der Kondensatorspannung mehrere Signale oder Signalfolgen (Reset, Fehler). Auch diese Schaltung ist angesichts der vielen benötigten Bauelemente recht aufwendig. Besonders nachteilig ist jedoch, daß die zugeführte Taktfrequenz nur sehr ungenau auf Abweichungen überprüft werden kann. Dies sei im folgenden näher erläutert:

Die zu überwachende Impulsfolge darf eine gewisse Schwankungsbreite aufweisen, innerhalb der eine korrekte Funktion der zu überwachenden Vorrichtung gewährleistet ist. Ebenso weist der aus dem Widerstand (R1) und dem Kondensator bestehende Frequenz-Spannungswandler, bedingt durch Bauteiletoleranzen, einen gewissen Fehler auf. Dies gilt insbesondere, wenn man zur Frequenz-Spannungswandlung eine solch einfache Anordnung wählt, wie er in der Figur 1 der DE-OS 36 40 351 dargestellt ist. Auch bei Verwendung besonders toleranzarmer und damit teurerer Bauteile ist mit einem gewissen Fehler aufgrund äußerer Einflüsse, wie z. B. Temperatur oder Alterung der Bauteile, zu rechnen. Der Fensterbereich des Fensterkomparators muß daher sowohl die erlaubte Schwankungsbreite der zu überwachenden Impulsfolge als auch den Wandlungsfehler des Frequenz-Spannungswandlers berücksichtigen.

Wählt man dabei einen großen Fensterbereich, der mögliche Toleranzen des Frequenz-Spannungswandlers umfaßt, so ist es möglich, da hier der wahre Wandlungsfehler des Frequenz-Spannungswandlers unbekannt ist, daß der Impulsabstand außerhalb des erlaubten Schwankungsbereichs liegt, ohne daß eine Abschaltung des überwachten Systems erfolgt. Berücksichtigt man den Wandlungsfehler des Frequenz-Spannungswandlers bei der Einstellung des Fensterbereichs dagegen nicht, so wird nicht die tatsächliche erlaubte Schwankungsbreite des Triggerimpulsabstandes ausgenutzt. Stattdessen erfolgt das Ansprechen des Fensterkomparators je nach Richtung der Abweichung des Impulsabstandes vom Sollwert einmal zu früh und einmal zu spät.

Aufgabe der Erfindung ist es daher, eine Schaltung gemäß des Oberbegriffs des Anspruchs 1 zu schaffen, die besonders einfach und kostengünstig aufgebaut ist und dabei eine möglichst genaue überwachung des Impulsabstandes einer Impulsfolge ermöglicht.

Diese Aufgabe wird nach den vorliegenden Ansprüchen, erfindungsgemäß dadurch gelöst, daß das Spannungssignal oder ein dem Spannungssignal entsprechendes Signal an einem Rechenbaustein anliegt und daß dieser Rechenbaustein je nach Höhe des Spannungssignales oder des dem Spannungssignal entsprechenden Signales den zeitlichen Abstand der von einem Rechenbaustein abgegebenen Triggerimpulse verändert, solange die vom Rechenbaustein empfangenen Spannungssignale oder die dem Spannungssignal entsprechenden Signale außerhalb eines vorgegebenen Wertebereichs liegen.

Die erfindungsgemäße Schaltung weist damit einen Regelkreis zur Konstanthaltung des Impulsabstandes der zu überwachenden Impulsfolge auf. Hierdurch kann die vom Frequenz-Spannungswandler abgegebene Spannung, die vom Impulsabstand der zu überwachenden Impulsfolge abhängt, auf einen Wert geregelt werden, der im Fensterbereich des Fensterkomparators liegt. Da die vom Fensterkomparator abgegebene Spannung auf einen festen Wert eingeregelt wird, kann der Fensterbereich des Fensterkomparators, im Vergleich zu Schaltungen ohne Regelung, sehr schmal ausgelegt werden. Dies bringt den Vorteil mit sich, daß die relative Abweichung der geregelten Triggerimpulsfrequenz vom Idealwert kaum größer werden kann als der Wandlungsfehler des Frequenz-Spannungswandlers.

Die erfindungsgemäße Schaltung weist dabei einen besonders einfachen und kostengünstigen Aufbau auf und eignet sich, unabhängig von weiteren, z. B. durch die Rechenbausteine oder durch Spannungsüberwachungsschaltungen realisierten Sicherheitsfunktionen, besonders als zusätzliche Sicherheitseinrichtung bei besonders sicherheitskritischen Vorrichtungen.

Besonders vorteilhaft an dieser Schaltung ist auch, daß die Überwachungsschaltung ohne weitere Änderungen sowohl einen als auch zwei Rechenbausteine überwachen kann.

Weitere vorteilhafte Ausgestaltungen und Weiterentwicklungen gehen aus den Unteransprüchen hervor.

So weist die erfindungsgemäße Schaltung vorteilhafterweise einen eigenen Spannungsversorgungsbaustein auf, der vorteilhafterweise besonders gegen impulsartige Spannungsspitzen geschützt ist. Damit ist diese durch die Überwachungsschaltung realisierte Sicherheitsfunktion weitgehend unabhängig von der Spannungsversorgung der übrigen Vorrichtung und insbesondere auch unabhängig von der Funktionsfähigkeit weiterer Sicherheitsvorrichtungen.

Vorteilhaft ist auch, daß das Ausgangssignal des Fensterkomparators als Freigabesignal für ein Sicherheitsrelais verwendet wird, welches über einen Arbeitskontakt die Spannungsversorgung für ein sicherheitskritisches Element, beispielsweise einen Aktuator, freigibt. Weiterhin ist es vorteilhaft, eine Ansteuerschaltung zur Ansteuerung der Sicherheitsrelais vorzusehen. Besonders günstig ist es dabei, wenn die Ansteuerschaltung sowohl über eine Ansteuerungsleitung als auch über einer Überwachungsleitung mit mindestens einem der Rechenbausteine verbunden ist. Durch diesen Aufbau kann auf einfachste Weise das Sicherheitsrelais über den mindestens einen Rechenbaustein betätigt werden. Auf ebenso einfache Weise erfolgt die Überwachung des Schaltzustandes des Sicherheitsrelais durch den mindestens einen Rechenbaustein.

Ein besonderer Vorteil ist aber auch darin zu sehen, daß durch diesen Aufbau der mindestens eine Rechenbaustein die Funktionsfähigkeit der Überwachungsschaltung auf einfachste Weise überprüfen kann.

Aufbau und Funktion der erfindungsgemäßen Schaltung wird im folgenden anhand der in der Zeichnung dargestellten Ausführungsbeispiele erläutert.
Die Figur 1 zeigt dabei schematisch eine Schaltung mit zwei überwachten Rechenbausteinen,
die Figur 2 zeigt eine gleichartige Schaltung mit einem überwachten Rechenbaustein.

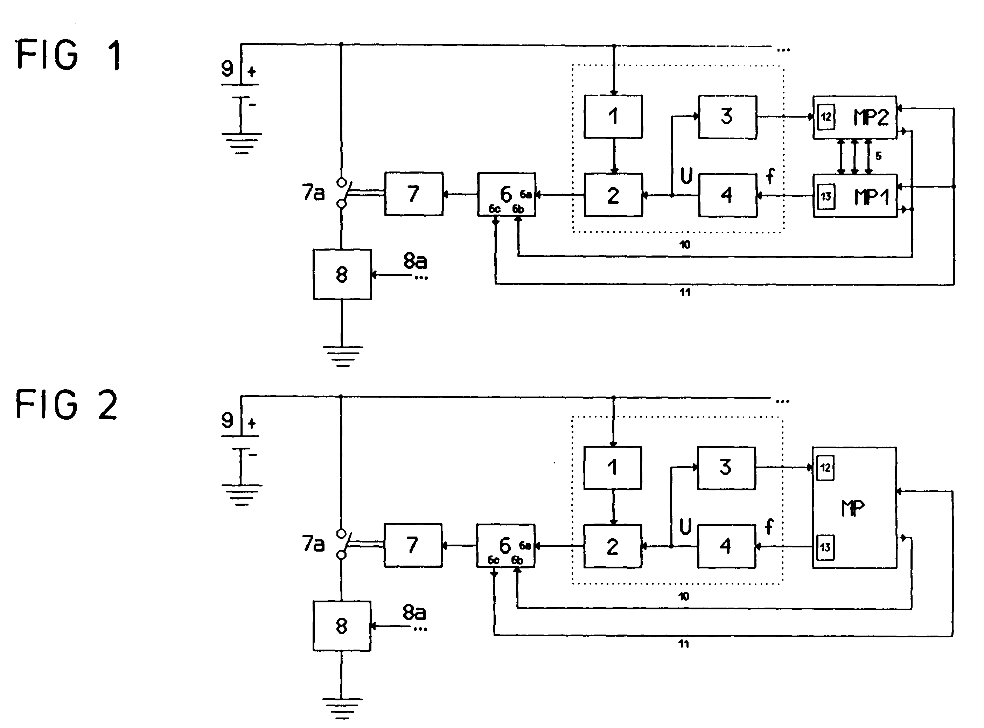

Die in der Figur 1 dargestellte erfindungsgemäße Schaltung besteht aus einer Spannungsquelle (9), einer Überwachungsschaltung (1, 2, 3, 4), zwei Rechenbausteinen (MP1, MP2), einer Ansteuerschaltung (6) für ein Sicherheitsrelais (7), welches über einen Arbeitskontakt (7a) eine elektrische Verbindung zwischen einem Aktuator (8) und der Spannungsquelle (9) herstellen oder trennen kann. Hinzu kommen selbstverständlich noch elektrische Verbindungsleitungen, von denen einige Steuerungs- und Kommunikationsleitungen (5, 10, 11) besonders hervorgehoben sind.

Die Überwachungsschaltung (1, 2, 3, 4), die in der Zeichnung jeweils durch eine Umrahmung hervorgehoben wird, besteht aus einem eigenen Spannungsversorgungsbaustein (1), einem Fensterkomparator (2), einem Entkopplungsbaustein (3), sowie einem Frequenz-Spannungswandler (4). Die Baugruppen (2, 3, 4) besitzen einen eigenen Spannungsversorgungsbaustein (1), der von einer (nicht dargestellten) Spannungsversorgung für weitere Bauelemente unabhängig ist. Im dargestellten Ausführungsbeispiel versorgt der Spannungsversorgungsbaustein (1) dabei nur den Fensterkomparator (2), da sich der Entkopplungsbaustein (3) sowie der Frequenz-Spannungswandler (4) auf einfache und kostengünstige Weise allein mit passiven Bauelementen realisieren lassen. Der Frequenz-Spannungswandler (4) kann dabei beispielsweise als "Ladungspumpe" ausgeführt sein, also als Zusammenschaltung eines Widerstands und eines Kondensators, bei der der Kondensator auf einen von dem zeitlichen Abstand der zugeführten Impulse abhängigen Spannungswert auf- oder entladen wird.

Der Entkopplungsbaustein (3) kann als einfacher Widerstand ausgeführt sein. Der Frequenz-Spannungswandler (4) bildet zusammen mit dem Entkopplungsbaustein (3) und den beiden Rechenbausteinen (MP1, MP2) einen geschlossenen Regelkreis, wobei ein Kommunikationsbus (5) die Verbindung zwischen den beiden Rechenbausteinen (MP1, MP2) herstellt.

Der Ausgang des Frequenz-Spannungswandlers (4) ist mit dem Eingang des Fensterkomparators (2) verbunden. Der Ausgang des Fensterkomparators (2) ist mit dem Eingang (6a) einer Ansteuerschaltung (6) für ein Sicherheitsrelais (7) verschaltet.

Die Rechenbausteine (MP1, MP2) stehen über die Ansteuerungsleitung (10) sowie die Überwachungsleitung (11) mit dem Eingang (6b) bzw. dem Ausgang (6c) der Ansteuerschaltung (6) in elektrisch leitender Verbindung. Die Ansteuerungsleitung (10) dient hierbei zur Ansteuerung des Sicherheitsrelais (7) durch mindestens einen der Rechenbaustein, während die Überwachungsleitung (11) wenigstens einem der Rechenbausteine (MP, MP1, MP2) ein dem Relaisstrom entsprechendes Signal zuführt.

Das Arbeitskontakt (7a) des Sicherheitsrelais (7) verbindet oder trennt einen oder mehrere Aktuatoren (8) von der Spannungsquelle (9). Das Sicherheitsrelais (7) ermöglicht oder verhindert also die Ansteuerung der Aktuatoren (8). Die eigentliche Ansteuerung der Aktuatoren (8) erfolgt über mindestens eine Aktuatoransteuerungsleitung (8a) durch eine in der Figur nicht dargestellte Aktuatortreiberschaltung.

Eine im wesentlichen gleichartige Schaltung zeigt die Figur 2, wobei für gleiche oder gleichwirkende Teile die gleichen Bezugszeichen, wie in der Figur 1 verwendet werden.

Die in der Figur 2 dargestellte Schaltung dient zur Überwachung einer Vorrichtung, die statt zwei nur einen Rechenbaustein (MP) aufweist. Der bei der Beschreibung der Figur 1 angesprochene Regelkreis wird hier durch den Rechenbaustein (1), den Frequenz-Spannungswandler (4) und den Entkopplungsbaustein (3) gebildet. Der Rechenbaustein (MP) übernimmt dabei sämtliche Aufgaben und Funktionen, die in der Figur 1 auf die beiden Rechenbausteine (MP1, MP2) aufgeteilt sind.

Der übrige Schaltungsaufbau stimmt mit dem in der Figur 1 gezeigten überein.

Die erfindungsgemäße Schaltung kann also ohne wesentliche Änderungen zur Überwachung sowohl eines als auch von zwei Rechenbausteinen (MP, MP1, MP2) verwendet werden.

Im folgenden soll die Funktion der erfindungsgemäßen Schaltung anhand der Zeichnung, insbesondere anhand des in der Figur 1 gezeigten Ausführungsbeispiels näher erläutert werden.

Eine besonders sicherheitskritische Vorrichtungen weist zwei Rechenbausteine (MP1, MP2) auf, die sich über den Kommunikationsbus (5) gegenseitig in ihrer Funktion überwachen. In Abhängigkeit davon, ob ein Fehler erkannt wurde oder nicht, kann jeder der Rechenbausteine (MP1, MP2) über die Ansteuerungsleitung (10) ein Signal an eine Ansteuerschaltung (6) geben und so die Betätigung eines Sicherheitsrelais ermöglichen oder sperren. Das Sicherheitsrelais (7) sperrt über den Arbeitskontakt (7a) die Spannungsversorgung eines oder mehrerer Aktuatoren (8), so daß bei fehlerhaftem Funktionieren der Vorrichtung eine fehlerhafte Betätigung der Aktuatoren (8) verhindert wird. Trotz der gegenseitigen Überwachung der Rechenbausteine (MP1, MP2) ist es durchaus denkbar, daß Fehler vorkommen, die nicht erkannt werden, bzw. nicht zur Abschaltung des Sicherheitsrelais führen. Dies kann insbesondere dann vorkommen, wenn beide Rechenbausteine (MP1, MP2) gleichzeitig beispielsweise durch einen kurzzeitigen Überspannungsimpuls ganz oder teilweise zerstört sind und so eine Abschaltung des Sicherheitsrelais (7) nicht bewirken können.

Daher ist es sinnvoll, eine weitere Überwachungsschaltung (1, 2, 3, 4) vorzusehen, die ständig die Funktionsfähigkeit beider Rechenbausteine (MP1, MP2) überprüft und gegebenenfalls unabhängig von den Rechenbausteinen (MP1, MP2) das Sicherheitsrelais (7) abschaltet.

Hierzu gibt der Rechenbaustein (MP1) an vorbestimmten Punkten des Programmablaufs Triggerimpulse an den Frequenz-Spannungswandler (4). Der Frequenz-Spannungswandler (4) wandelt die Triggerimpulse in eine zu ihrer Frequenz (f) proportionalen Spannung (U) um und gibt sie über den Entkopplungsbaustein (3) an den Rechenbaustein (MP2) sowie an den Eingang des Fensterkomparators (2). Der Rechenbaustein (MP2) besitzt intern einen Analog/Digital-Wandler (12), der das vom Entkopplungsbaustein (3) abgegebene Spannungssignal (U) digitalisiert und so der Weiterverarbeitung durch den Rechenbaustein (MP2) zugänglich macht.

Der Rechenbaustein (MP2) teilt dem Rechenbaustein (MP1) das empfangene Datum über den Kommunikationsbus (5) mit. Der Rechenbaustein (MP1) vergleicht nun dieses Datum mit einem vorgegebenen Sollwert und verändert, falls nötig, den zeitlichen Abstand der ausgegebenen Triggerimpulse. Dieses kann z. B. dadurch geschehen, daß der Rechenbaustein (MP1) die Länge einer in den Programmablauf eingebauten Zeitschleife variiert. Eine solche Zeitschleife kann insbesondere durch einen in einem Rechenbaustein (MP1) integrierten Timer (13) realisiert werden.

Die Variation der Länge der Zeitschleife geschieht solange, bis die vom Frequenz-Spannungswandler (4) an den Entkopplungsbaustein (3) und den Fensterkomparator (2) abgegebene Spannung innerhalb eines vorgegebenen Sollwertbereiches liegt. Der im Rechenbaustein (MP2) gespeicherte Sollwertbereich entspricht dabei im wesentlichen dem Fensterbereich des Fensterkomparators (2). Der aus den Rechenbausteinen (MP1, MP2) sowie aus dem Frequenz-Spannungswandler (4) und dem Entkopplungsbaustein (3) bestehende Regelkreis regelt also die vom Frequenz-Spannungswandler (4) abgegebene Spannung auf den Fensterbereich des Fensterkomparators (2) ein. Liegt nun der Sollwert innerhalb des Fensters, so gibt der Fensterkomparator (2) ein Freigabesignal an die Ansteuerschaltung (6) des Sicherheitsrelais (7). Liegt dagegen die vom Frequenz-Spannungswandler (4) abgegebene Spannung außerhalb des Fensterbereichs des Fensterkomparators (2), so sperrt dieser die Ansteuerung des Sicherheitsrelais (7).

Zur eigentlichen Ansteuerung des Sicherheitsrelais (7) über die Ansteuerschaltung (6) gibt einer der Rechenbausteine (MP1, MP2) über die Ansteuerungsleitung (10) ein Ansteuersignal auf den Eingang (6b) der Ansteuerschaltung (6). Zur Ansteuerung des Sicherheitsrelais (7) muß daher sowohl ein Ansteuerungssignal am Eingang (6b) der Ansteuerschaltung (6) als auch ein vom Fensterkomparator (2) abgegebenes Freigabesignal am Eingang (6a) der Ansteuerschaltung (6) vorliegen. Gelingt es dem Regelkreis (MP1, MP2, 3, 4) nicht am Eingang des Fensterkomparators (2) eine Spannung innerhalb des Fensterbereichs einzuregeln, was auf das Fehlverhalten wenigstens eines Rechenbausteins (MP1, MP2) schließen läßt, so erzeugt der Fensterkomparator (2) kein Freigabesignal für die Ansteuerschaltung (6), und die Betätigung von Aktuatoren (8) wird über den geöffneten Kontakt (7a) des Sicherheitsrelais (7) zuverlässig verhindert.

Die erfindungsgemäße Schaltung weist dabei trotz ihres einfachen Aufbaus eine Reihe von Vorteilen auf. Zum einen erfolgt durch den geschlossenen Regelkreis (MP1, MP2, 3, 4) ständig eine Überprüfung beider Rechenbausteine (MP1, MP2). Auch bei Ausfall nur eines Rechenbausteins (MP1, MP2) wird es nicht mehr gelingen, den vorgegebenen Spannungssollwert am Eingang des Fensterkomparators (2) einzustellen, so daß die Ansteuerung des Sicherheitsrelais (7) im Fehlerfall zuverlässig unterbleibt. Besonders vorteilhaft ist natürlich, daß auch bei Ausfall beider Rechenbausteine eine zuverlässige Abschaltung des Sicherheitsrelais (7) erfolgt.

Ein weiterer Vorteil ergibt sich daraus, daß die erfindungsgemäße Schaltung weitgehend unabhängig von anderen Teilen der zu überwachenden Vorrichtung arbeitet.

Hierbei ist es insbesondere vorteilhaft, daß die Überwachungsschaltung (1, 2, 3, 4) einen eigenen Spannungsversorgungsbaustein (1) aufweist, der insbesondere unabhängig von der nicht eingezeichneten Spannungsversorgung für die übrige Vorrichtung arbeitet, so daß die Überwachungsschaltung (1, 2, 3, 4) eine von der übrigen Vorrichtung vollkommen unabhängige, zusätzliche Sicherheitseinrichtung darstellt.

Durch den Aufbau eines Regelkreises (MP1, MP2, 3, 4) erhält man zudem eine sehr genaue Überwachung der Programmablaufgeschwindigkeit der Rechenbausteine (MP1, MP2). Diese sehr genaue Überwachungsmöglichkeit ist dadurch gegeben, daß die Fensterbreite des Fensterkomparators (2) sehr klein gehalten werden kann, da dessen Eingangsspannung (U) auf einen konstanten Wert in der Mitte des Fensterbereiches geregelt wird. Die Breite des Fensterbereichs braucht dabei nur die üblichen Schwankungen während des Regelvorgangs zu umfassen.

Der Wandlungsfehler des Frequenz-Spannungswandlers (4), der als sehr einfach aufgebautes und Kapazitäten enthaltender Baustein eine gewisse Toleranz aufweist, braucht bei der Vorgabe der Fensterbreite ebenso wenig berücksichtigt zu werden, wie eine erlaubte Toleranzbreite für die Triggerimpulsfrequenz (f).

Ist die einzige Forderung, nämlich daß der relative Wandlungsfehler des Frequenz-Spannungswandlers (4) kleiner ist als die maximal erlaubte relative Abweichung der Triggerimpulsfrequenz (f) von einem Sollwert erfüllt, so kann aufgrund des Regelvorgangs der Programmablauf sehr exakt überwacht werden.

Ein nicht zu unterschätzender Vorteil ist auch darin zu sehen, daß die Funktionsfähigkeit der Überwachungsschaltung (1, 2, 3, 4) sehr leicht testbar ist. Hierzu gibt der Rechenbaustein (MP1) Triggerimpulse in einem sehr kurzen zeitlichen Abstand aus. Da einfach aufgebaute Frequenz-Spannungswandler (4) ein ausgeprägtes Tiefpaßverhalten zeigen, steigt, bedingt durch die hohe Impulsfrequenz, die Spannung am Fensterkomparator (2) in Form einer e-Funktion kontinuierlich an. Erreicht diese Spannung den unteren Bereich des Spannungsfensters, so gibt der Fensterkomparator (2) ein Freigabesignal an die Ansteuerschaltung (6) ab. Das Freigabesignal bleibt solange bestehen, bis die ansteigende Spannung den oberen Fensterbereich überschreitet. Danach nimmt der Fensterkomparator (2) das Freigabesignal zurück.

Währenddessen steuert der Rechenbaustein (MP2) den Eingang (6b) der Ansteuerschaltung (6) an, um ein Schalten des Relais zu ermöglichen und prüft gleichzeitig den Relaisstrom über die Überwachungsleitung (11) sowie über den Entkopplungsbaustein (3) die am Fensterkomparator (2) anliegende Spannung (U).

Die Rechenbausteine (MP1, MP2) können so leicht die Abhängigkeit zwischen der Spannung (U) am Fensterkomparator (2) und dem Schaltzustand des Sicherheitsrelais (7) bestimmen und so die Funktionsfähigkeit der Überwachungsschaltung (1, 2, 3, 4) prüfen.

Wie aus der Figur 1 hervorgeht, läßt sich die Schaltung ohne Änderung auch zur Überwachung von Vorrichtungen mit nur einem Rechenbaustein (MP) verwenden, wobei dieser Rechenbaustein (MP) sowohl die Aufgabe der Takterzeugung als auch die Aufgabe der Spannungsüberwachung übernimmt.

### Bezugszeichenliste der Figuren 1/2

### Schaltung zur überwachung von mindestens einem Rechenbaustein

- 1, 2, 3, 4: überwachungsschaltung
- 1: Spannungsversorgungsbaustein
- 2: Fensterkomparator
- 3: Entkopplungsbaustein
- 4: Frequenz-Spannungswandler
- 5: Kommunikationsbus
- 6: Ansteuerschaltung (für das Sicherheitsrelais)
- 6a, 6b: Eingänge der Ansteuerschaltung
- 6c: Ausgang der Ansteuerschaltung
- 7: Schaltelement (Sicherheitsrelais)
- 7a: Arbeitskontakt (des Sicherheitsrelais)
- 8: Aktuator(en)
- 8a: Aktuatoransteuerungsleitung
- 9: Spannungsquelle
- 10: Ansteuerungsleitung
- 11: überwachungsleitung
- 12: Analog/Digital-Wandler
- 13: Timer
- MP1, MP2, MP: Rechenbausteine
- U: Spannungssignal
- f: Frequenz (der Triggerimpulse)

## Patentansprüche

1. Schaltung zur überwachung von mindestens einem Rechenbaustein (MP1, MP2, MP), bei dem der genannte mindestens eine Rechenbaustein (MP1, MP) während des Programmlaufs Triggerimpulse an eine überwachungsschaltung (1, 2, 3, 4) abgibt, und bei der die überwachungsschaltung (1, 2, 3, 4) einen Frequenz-Spannungswandler (4) aufweist, welcher ein von der Frequenz der Triggerimpulse abhängiges Spannungssignal (U) abgibt und die einen Fensterkomparator (2) aufweist, der ein Signal erzeugt, wenn der Frequenz-Spannungswandler (4) eine Spannung abgibt, die innerhalb des Fensterbereichs des Fensterkomparator (2) liegt, dadurch gekennzeichnet, daß das Spannungssignal (U) oder ein dem Spannungssignal (U) entsprechendes Signal an dem genannten mindestens, einem Rechenbaustein (MP2, MP) anliegt und daß dieser Rechenbaustein (MP2, MP) je nach Höhe des Spannungssignals (U) oder des dem Spannungssignal entsprechenden Signals den zeitlichen Abstand der von dem genannten mindestens einem Rechenbaustein (MP1, MP) abgegebenen Triggerimpulse verändert, solange die von dem genannten mindestens einem Rechenbaustein (MP2, MP) empfangenen Spannungssignale oder die dem Spannungssignal (U) entsprechenden Signale außerhalb eines vorgegebenen Wertebereichs liegen, wobei zu dem die Triggerimpulse ausgebenden Rechenbaustein (MP1, MP) ein digitaler Timer (13) gehört, dessen Zeitkonstante die Ausgabegeschwindigkeit der Triggerimpulse mitbestimmt, und zur Veränderung des zeitlichen Abstands der Triggerimpulse der Rechenbaustein (MP1, MP) die Zeitkonstante des Timers (13) verändert.

2. Schaltung nach Anspruch 1, dadurch gekennzeichnet, daß ein Analog/Digital-Wandler (12) vorgesehen ist, der das vom Frequenz-Spannungswandler (4) abgegebene Spannungssignal (U) in einen Digitalwert wandelt.

3. Schaltung nach Anspruch 2, dadurch gekennzeichnet, daß der Analog/Digital-Wandler (12) in einem Rechenbaustein (MP2, MP) integriert ist.

4. Schaltung nach Anspruch 1, dadurch gekennzeichnet, daß der Fensterkomparator (2) das Signal an den Eingang (6a) einer Ansteuerschaltung (6) zur Betätigung ein Schaltelement (7) gibt, solange das vom Frequenz-Spannungswandler (4) abgegebene Spannungssignal (U) innerhalb des Fensterbereichs des Fensterkomparators (2) liegt.

5. Schaltung nach Anspruch 4, dadurch gekennzeichnet, daß das Schaltelement (7) ein Sicherheitsrelais ist, welches über einen Arbeitskontakt (7a) mindestens einen Aktuator (8) mit einer Spannungsquelle (9) verbindet.

6. Schaltung nach Anspruch 1, dadurch gekennzeichnet, daß die Überwachungsschaltung (1, 2, 3, 4) einen eigenen Spannungsversorgungsbaustein (1) besitzt.

7. Schaltung nach Anspruch 6, dadurch gekennzeichnet, daß der Spannungsversorgungsbaustein (1) besonders gut gegen Impulse hoher Energie geschützt ist.

8. Schaltung nach Anspruch 1, dadurch gekennzeichnet, daß der Frequenz-Spannungswandler (4) ausschließlich aus passiven Bauelementen aufgebaut ist.

9. Schaltung nach Anspruch (1) dadurch gekennzeichnet, daß der zumindest eine Rechenbaustein (MP, MP1, MP2) die Funktion der Überwachungsschaltung (1, 2, 3, 4) durch Variation des zeitlichen Abstands der von einem Rechenbaustein (MP1, MP) ausgegebenen Triggerimpulse und Einlesen eines vom Frequenz-Spannungswandler (4) abgegebenen Spannungssignals und eines vom Schaltzustand des Schaltelements (7) abhängigen Signals zumindest einmal während des Betriebs der Überwachungsschaltung (1, 2, 3, 4) überprüft.

10. Schaltung nach Anspruch 1, dadurch gekennzeichnet, daß die Schaltung zu einem Blockierschutzsystem in einem Kraftfahrzeug gehört.

## Claims

1. Circuit for monitoring at least one computing unit (MP1, MP2, MP), wherein the said at least one computing unit (MP1, MP) delivers trigger pulses to a monitoring circuit (1, 2, 3, 4) during the program run, the monitoring circuit (1, 2, 3, 4) having a frequency to voltage converter (4) which delivers a voltage signal (U) dependent upon the frequency of the trigger pulses, and having a window comparator (2) which produces a signal when the frequency to voltage converter (4) delivers a voltage which lies within the window range of the window comparator (2), characterised in that the voltage signal (U) or a signal corresponding to the voltage signal (U) is present at the said at least one computing unit (MP2, MP) and that this computing unit (MP2, MP), in dependence upon the magnitude of the voltage signal (U) or of the signal corresponding to the voltage signal (U), varies the time interval of the trigger pulses delivered by the said at least one computing unit (MP1, MP) so long as the voltage signals or the signals corresponding to the voltage signal (U) received by the said at least one computing unit (MP2, MP) lie outside a predetermined value range, the computing unit (MP1, MP) which outputs the trigger pulses having a digital timer (13) whose time constant co-determines the output speed of the trigger pulses and the computing unit (MP1, MP) varying the time constant of the timer (13) to vary the time intervals of the trigger pulses.

2. Circuit according to claim 1, characterised in that an analog to digital converter (12) is provided which converts to digital value the voltage signal (U) delivered by the frequency to voltage converter (4).

3. Circuit according to claim 2, characterised in that the analog to digital converter (12) is integrated into a computing unit (MP2, MP).

4. Circuit according to claim 1, characterised in that the window comparator (2) gives the signal to the input (6a) of a command circuit (6) to operate a switch element (7) so long as the voltage signal (U) delivered by the frequency to voltage converter (4) lies within the window range of the window comparator (2).

5. Circuit according to claim 4, characterised in that the switch element (7) is a safety relay which, via a make-contact (7a), connects at least one actuator (8) to a voltage source (9).

6. Circuit according to claim 1, characterised in that the monitoring circuit (1, 2, 3, 4) has a voltage supply unit (1) of its own.

7. Circuit according to claim 6, characterised in that the voltage supply unit (1) is protected particularly well against high energy pulses.

8. Circuit according to claim 1, characterised in that the frequency to voltage converter (4) is constructed exclusively of passive elements.

9. Circuit according to claim (1), characterised in that the at least one computing unit (MP, MP1, MP2) checks the operation of the monitoring circuit (1, 2, 3, 4) by varying the time intervals of the trigger pulses put out by a computing unit (MP1 ,MP) and reading-in a voltage signal delivered by the frequency to voltage converter (4) and a signal dependent on the switch condition of the switch element (7), at least once during operation of the monitoring circuit (1, 2, 3, 4).

10. Circuit according to claim 1, characterised in that the circuit forms part of an anti-lock system of a motor vehicle.

## Revendications

1. Circuit pour surveiller au moins un composant de calcul (MP1, MP2, MP), circuit dans lequel ledit composant de calcul (MP1, MP) délivre, pendant l'exécution du programme, des impulsions de déclenchement à un circuit de surveillance (1, 2, 3, 4), et dans lequel le circuit de surveillance (1, 2, 3, 4) comporte un convertisseur fréquence-tension (4) qui délivre un signal de tension (U) dépendant de la fréquence des impulsions de déclenchement, de même qu'un comparateur à fenêtre (2) qui génère un signal lorsque le convertisseur fréquence-tension (4) délivre une tension comprise à l'intérieur de l'étendue de fénêtre du comparateur (2), caractérisé en ce que le signal de tension (U), ou un signal correspondant au signal de tension (U), est appliqué audit composant de calcul (MP2, MP) et que ce composant de calcul (MP2, MP) change l'espacement dans le temps des impulsions de déclenchement délivrés par ledit composant de calcul (MP1, MP) suivant l'amplitude du signal de tension (U), ou du signal correspondant au signal de tension, tant que les signaux de tension reçus dudit composant de calcul (MP2, MP) ou les signaux correspondant au signal de tension (U) se trouvent en dehors d'une plage de valeurs prédéterminée, le composant de calcul (MP1, MP) délivrant les impulsions de déclenchement étant associé à un temporisateur numérique (13) dont la constante de temps co-détermine la vitesse de délivrance des impulsions de déclenchement et le composant de calcul (MP1, MP) changeant la constante de temps du temporisateur (13) en vue du changement de l'espacement temporel des impulsions de déclenchement.

2. Circuit selon la revendication 1, caractérisé en ce qu'il comprend un convertisseur analogique/numérique (12) qui convertit le signal de tension (U) délivré par le convertisseur fréquence-tension (4) en une valeur numérique.

3. Circuit selon la revendication 2, caractérisé en ce que le convertisseur analogue/numérique (12) est intégré dans un composant de calcul (MP2, MP).

4. Circuit selon la revendication 1, caractérisé en ce que le comparateur à fenêtre (2) fournit le signal à l'entrée (6a) d'un circuit de pilotage (6) pour l'actionnement d'un élément de commutation (7) tant que le signal de tension (U) délivré par le convertisseur fréquence-tension (4) est compris dans l'étendue de fenêtre du comparateur à fenêtre (2).

5. Circuit selon la revendication 4, caractérisé en ce que l'élément de commutation (7) est un relais de sécurité reliant au moins un actionneur (8) à une source de tension (9) à travers un contact de fermeture (7a).

6. Circuit selon la revendication 1, caractérisé en ce que le circuit de surveillance (1, 2, 3, 4) possède un composant d'alimentation en tension (1) qui lui est propre.

7. Circuit selon la revendication 6, caractérisé en ce que le composant d'alimentation en tension (1) est particulièrement bien protégé contre des impulsions de haute énergie.

8. Circuit selon la revendication 1, caractérisé en ce que le convertisseur fréquence-tension (4) est composé exclusivement d'éléments passifs.

9. Circuit selon la revendication 1, caractérisé en ce que ledit composant de calcul (MP, MP1, MP2) vérifie le fonctionnement du circuit de surveillance (1, 2, 3, 4) au moins une fois pendant le fonctionnement du circuit de surveillance (1, 2, 3, 4) par variation de l'espacement dans le temps des impulsions de déclenchement délivrées par un composant de calcul (MP1, MP) et par mémorisation d'un signal de tension délivré par le convertisseur fréquence-tension (4) et d'un signal dépendant de la position de l'élément de commutation (7).

10. Circuit selon la revendication 1, caractérisé en ce qu'il appartient à un système antiblocage des roues d'un véhicule automobile.
